# EUROPEAN PATENT APPLICATION

(11) **EP 1 429 052 A1**
(43) Date of publication of application: **16.06.2004**
(21) Application number: 02765553.9
(22) Date of filing: 13.09.2002
(51) Int. Cl.: F16H 55/36

(54) **METHOD OF ASSEMBLING ROLLER CLUTCH BUILT−IN TYPE PULLEY DEVICE**

(30) Priority: 21.09.2001 JP 2001288207
(71) Applicant: NSK LTD.,, Shinagawa-ku, Tokyo 141-8560 (JP)
(72) Inventor: AIDA, Hiroshi, Fujisawa-shi, Kanagawa 251-0021 (JP)
(74) Representative: Klingseisen, Franz
(86) International application number: PCT/JP2002/009465
(87) International publication number: WO 2003/027539

(57) **Abstract**

The axial displacement of the clutch retainer 28 of the roller clutch 10 is prevented. And, part of the clutch retainer 28 is prevented from rubbing the portion which rotates together with the follower pulley 7 to suppress the heat generation during overrun. Accordingly, grease degradation is prevented and durability and reliability are improved. During assembling, with the inner clutch-race 21 being inserted midway on the radially inner side of the rollers 26, the clutch retainer 28 is rotated relative to the inner clutch race 21. With this operation, the inner-clutch race 21 is completely inserted while the springs are simultaneously compressed to press the rollers 26. Accordingly, the circumferential location of the rollers 26 is properly maintained while the inner clutch-race 21 is easily installed on the inner diameter side of the rollers 26 and so the assembling process thereof become easy.

## Description

### Field of the Invention:

This invention relates to improvements in assembling a pulley apparatus with a built-in roller clutch that is used in the drive of auxiliary machinery of an engine, for use in such as the follower pulley fixed to the end of the rotating shaft of the alternator or automobile generator, or the drive pulley fixed to the end of the crankshaft of an automobile engine.

### Background Technology

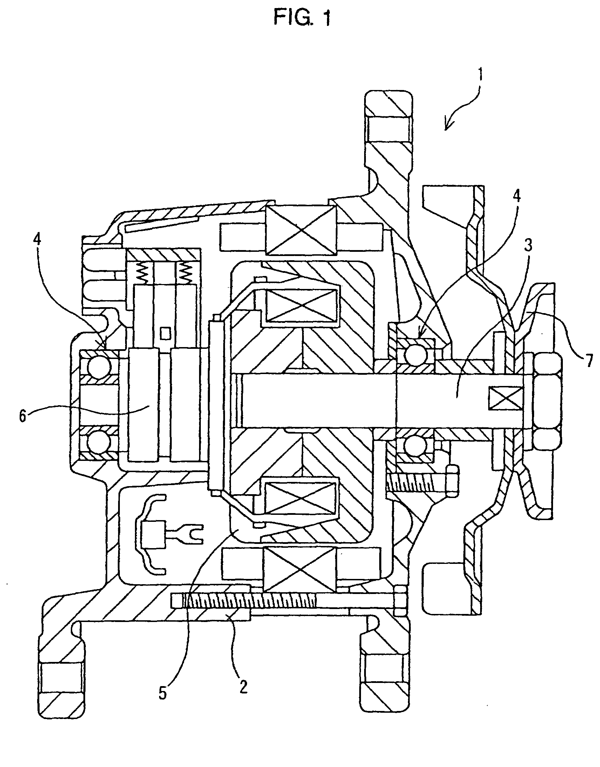

A construction of the alternator which performs the necessary power generation for the automobile using the engine of an automobile as a drive source was disclosed, for example, in Japanese patent publication No. Tokukai Hei 7-139550. Fig. 1 shows the alternator 1 described in that disclosure. A rotating shaft 3 is supported inside a housing 2 by a pair of rolling bearings 4 such that it rotates freely. A rotor 5 and a commutator 6 are located in the middle section of this rotating shaft 3. Also, there is a follower pulley 7 fixed to one end (right end in Fig. 1) of this rotating shaft 3 in the section that protrudes out from the housing 2. When assembled in an engine, an endless belt runs around this follower pulley 7 such that the rotating shaft 3 can be rotated and driven freely by the crankshaft of the engine.

Conventionally, a pulley that was simply fixed to the rotating shaft 3 was used as this follower pulley 7. However, recently, various kinds of pulley apparatuses with built-in one-way clutch have been proposed, and some have been used where in cases where there is a tendency for the running speed of the endless belt to be constant or to increase, power is transmitted freely to the rotating shaft from the endless belt, and in the case where there is a tendency for the running speed of the endless belt to decrease, the follower pulley rotates freely relative to the rotating shaft. For example, pulley apparatuses with built-in one-way clutch, having the functions described above, have been disclosed in Japanese patent publications Nos. Tokukai Hei 10-213207, 10-285873, 11-22753, and 11-63026. Moreover, the use of a roller clutch as the one-way clutch has also been known, such as described in each of the aforementioned disclosures.

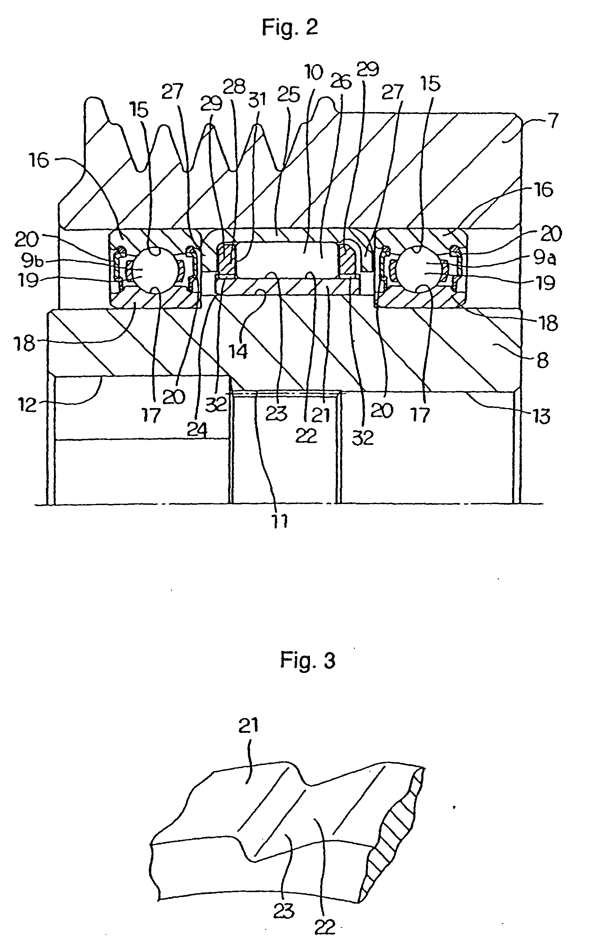

Figs. 2 to 6 show a previously known pulley apparatus with built-in roller clutch, such as described in these disclosures. This pulley apparatus with built-in roller clutch has a rotating member (a rotating shaft member), or more specifically a sleeve 8, that fits around the outside of the rotating shaft 3 of the alternator 1 (see Fig. 1). Also, a pulley member, or in other words a follower pulley 7 is located around this sleeve 8, such that it is concentric with the sleeve 8. Moreover, a pair of ball bearings 9a, 9b and a roller clutch 10 are located between the outer peripheral surface of the sleeve 8 and the inner peripheral surface of the follower pulley 7.

The sleeve 8 is formed generally into a substantially cylindrical shape and is fixed to the end of the rotating shaft 3 of the alternator 1 such that it rotates together with the rotating shaft 3. As shown in the example in the figure, in order to do this, a screw hole section 11 is formed around the inner peripheral surface in the middle section of the sleeve 8, and this screw hole section 11 is screwed together with a male screw section that is formed around the outer peripheral surface on the tip end of the rotating shaft 3. Also, a fitting hole section 12, having a hexagonal cross section, is formed on the inner peripheral surface on the tip end (left end in Fig. 2) of the sleeve 8 such that the tip end of a tool such as a hexagonal wrench can fit into this fitting hole section 12. Furthermore, the inner peripheral surface of the base end (right end in Fig. 2) of the sleeve 8 is a circular hole section 13 that freely fits tightly around the tip end of the rotating shaft 3 at a location closer to its middle section without lost motion. It is also possible to use other construction such as a spline joint, non-circular joint, or key joint so that the sleeve 8 does not rotate relative to the rotating shaft 3. Also, the center section of the outer peripheral surface of the sleeve 8 is a large-diameter section 14 that has a larger diameter than other sections.

On the other hand, the outer peripheral surface on the tip-end half of the follower pulley 7 is formed with a wave-shaped cross section in the width direction such that part of an endless belt, called Poly V-belt, can run around it. Also, a roller clutch 10 is located in the middle section in the axial direction of the space between the outer peripheral surface of the sleeve 8 and the inner peripheral surface of the follower pulley 7, and the ball bearings 9a, 9b are located at portions near both axial ends of this space to hold the roller clutch 10 on both axial sides.

The ball bearings 9a, 9b support radial loads and axial loads that are applied to the follower pulley 7 such that the follower pulley 7 can rotate freely with respect to the sleeve 8. Each of the ball bearings 9a, 9b comprises: an outer race 16 having an outer-raceway 15 of the deep-groove type formed around its inner peripheral surface; an inner race 18 having an inner-raceway 17 of the deep-grooved type formed around its outer peripheral surface; and a plurality of balls 19 located between the outer-raceway 15 and the inner-raceway 17, such that they can rotate freely. Also, the outer race 16 is fitted and fastened around the inner peripheral surface at a portion near either end of the follower pulley 7, and the inner race 18 is fitted and fastened around the outer peripheral surface at a portion near either end of the sleeve 8. Moreover, in this state, one surface in the axial direction of each inner race 18 comes in contact with the respective end surface (stepped surface) in the axial direction of the large-diameter section 14. Furthermore, seal rings 20 are located between the inner peripheral surface around both ends of the outer races 16 and the outer peripheral surface around both ends of the inner races 18 to cover the openings on both ends of the space where the balls 19 are located, respectively.

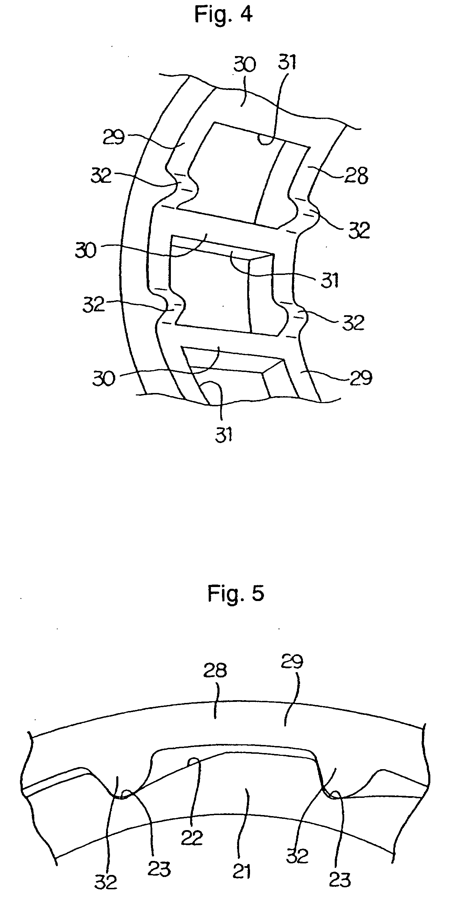

The roller clutch 10 transmits rotating force between the follower pulley 7 and sleeve 8 only when the follower pulley 7 tends to rotate in a specified direction with respect to the sleeve 8. In order to construct the roller clutch 10, an inner clutch-race 21 is interference-fitted and fastened onto the large-diameter section 14 of the sleeve 8. This inner clutch-race 21 is formed into a generally cylindrical shape by performing plastic working, such as pressing steel plate like carburized steel, and a cam surface 22 is formed around its outer peripheral surface. In other words, the cam surface 22 can be formed around the outer peripheral surface by forming a plurality of concave sections 23, called ramp sections, around the outer peripheral surface of the inner clutch-race 21 such that they are uniformly spaced around in the circumferential direction as shown in Figs. 3 and 5. In the example shown in the figures, a tapered concave beveled section 24 is formed around one end (left end in Fig. 2) around the inner peripheral surface of the inner clutch-race 21, and this beveled section 24 functions as a guide surface for when pressure fitting the inner clutch-race 21 around the outer peripheral surface of the large-diameter section 14.

On the other hand, an outer clutch-race 25 is interference-fitted and fixed in the middle section of the inner peripheral surface of the follower pulley 7, and at least the middle section in the axial direction of the inner peripheral surface of the outer clutch-race 25 coming in direct contact with a roller 26 (described below) is a simple cylindrical surface. This outer clutch-race 25 is also formed into a generally cylindrical shape by plastic working e.g. pressing steel plate like carburized steel plate, and inward facing flange sections 27a, 27b are formed on both ends in the axial direction of the outer clutch-race 25. Of the two flange sections 27a, 27b, the flange sections 27a (the left one in Fig. 2) is formed in advance when making the outer clutch-race 25, so it has the same thickness as that of the cylindrical portion of the outer clutch-race 25. On the other hand, the flange section 27b (the right one in Fig. 2) is formed after the roller 26 and clutch retainer 28 (described below) have been assembled on the inside in the radial direction of the outer clutch-race 25, so it is thin in material thickness.

Moreover, a clutch retainer 28 is fit around the outside of the inner clutch-race 21 such that it is impossible for it to rotate with respect to the inner clutch-race 21. A plurality of rollers 26, which together with the inner clutch-race 21 and the outer clutch-race 25 form the roller clutch 10, are held by the clutch retainer 28 such that they can freely roll and also move a little in the circumferential direction. This clutch retainer 28 is made of synthetic resin (for example, a synthetic resin such as polyamide 66, polyamide 46 or polyphenylene sulfide that is mixed with about 20% glass fibers) and is formed generally into a cage-like cylindrical shape, and as partly shown in Fig. 4, this clutch retainer 28 comprises a pair of ring-shaped rim sections 29, and a plurality of column sections 30 that connect these rim sections 29.

There are pockets 31 each defined on four sides by the inside surfaces of the rim sections 29 and the surfaces in the circumferential direction of the column sections 30 to hold the rollers 26, respectively, such that they can freely roll and move a little in the circumferential direction. Also, as shown in Fig. 5, protrusions 32 are formed at a plurality of locations on the inner peripheral surface of the rim sections 29 while concave sections 23 are formed on the outer peripheral surface of the inner clutch-race 21, and the protrusions 32 are fitted with the concave sections 23, so that the clutch retainer 28 is attached to the inner clutch-race 21 such that it cannot rotate with respect to the inner clutch-race 21.

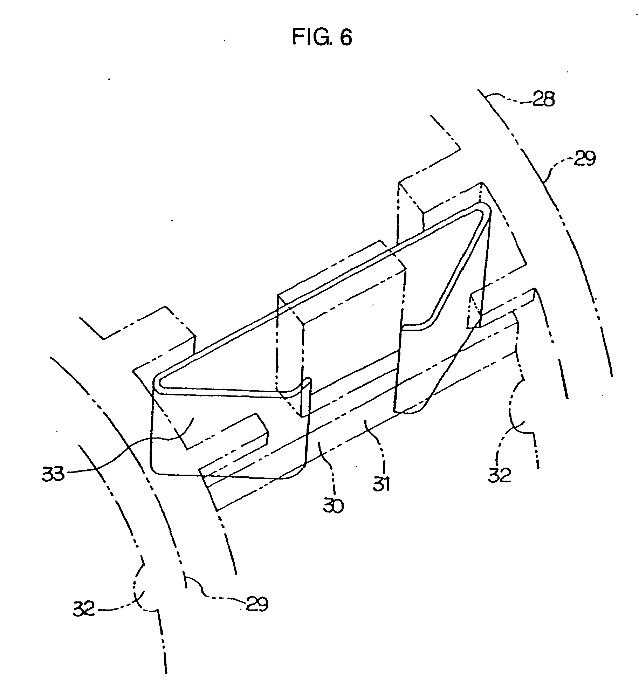

Moreover, a substantially cylindrical space is formed between the outer peripheral surface of the cam surface 22 and the inner peripheral surface (cylindrical surface) in the middle section of the outer clutch-race 25. As shown in Fig. 6, springs 33 are attached to one side in the circumferential direction of the column sections 30 of the clutch retainer 28, respectively. These springs 33 that are attached to the column sections 30, respectively, elastically press the rollers 26, that are held in the pockets 31, in the same circumferential direction of the clutch retainer 28 toward the section having a narrow width in the radial direction (toward the right, or in the clockwise direction of Fig. 5), respectively. In the example shown in the figure, flat springs made of spring steel plate and bent on both ends in a substantially hook shape are used as the springs 33, however it is also possible to use synthetic resin springs that are formed together in a single piece with the clutch retainer 28.

Also, both of the ends in the axial direction of the clutch retainer 28 come very close to and face the inside surfaces of the flange sections 27a, 27b of the outer clutch-race 25, so as to prevent the clutch retainer 28 from moving in the axial direction. However, instead of this construction, another construction for preventing the clutch retainer from moving in the axial direction has been known, in which a plurality of stepped sections are formed around the outer peripheral surface of a shaft member such as a sleeve to fit with parts of the clutch retainer, such as disclosed in Japanese patent publications No. Tokukai Hei 11-22753, No. Tokukai 2001-165201, etc.

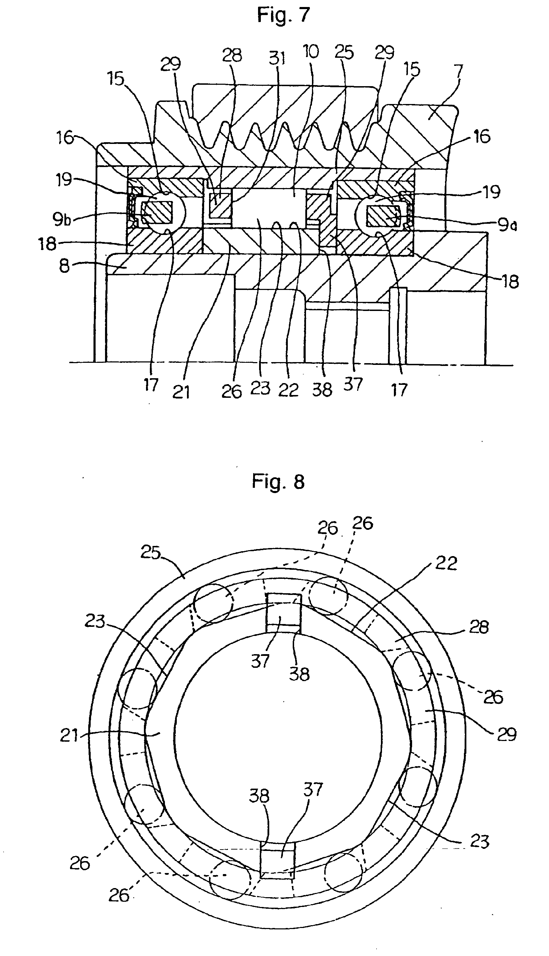

In the case of the first example of the conventional structure as shown in Figs. 1 to 6, the relative rotation between the inner clutch-race 21 and the clutch retainer 28 is prevented by engagement between the concave section 23 provided on the outer peripheral surface of the inner clutch-race 21 and the protrusion 32 provided on the inner peripheral surface of the clutch retainer 28. On the other hand, in Japanese patent publication No. Tokukai Hei 11-22753, the structure as shown in Figs. 7 and 8 is disclosed to prevent the relative rotation between the inner clutch-race 21 and the clutch retainer 28. In the case of the structure as shown in Figs. 7 and 8, the protrusion 37 which is bent radially inward at the end of the clutch retainer 28 is engaged with the notch 38 formed at the axial end of the inner clutch-race 21.

When using a pulley apparatus with built-in roller clutch that is constructed as described above and there is a tendency for the follower pulley 7 and sleeve 8 to relatively rotate to a specified direction, or in other words, when the follower pulley 7 tends to rotate relative to the sleeve 8 in the direction that the springs 33 push the rollers 26 (to the right or clockwise in Fig. 5), the rollers 26 bite into the sections having a narrow width in the radial direction in the substantially cylindrical space. Also, the follower pulley 7 cannot rotate relative to the sleeve 8 (this is called locked state). On the other hand, when the follower pulley 7 and sleeve 8 rotate in a direction opposite to the specified direction, or in other words, when the follower pulley 7 tends to rotate relative to the sleeve 8 in the direction (to the left or counterclockwise direction in Fig. 5) opposite the direction that the springs 33 push the rollers 26, the rollers 26 retract against the elastic force of the springs 33 toward the sections having a large width in the radial direction in the substantially cylindrical space, and the follower pulley 7 can rotate freely relative to the sleeve 8 (this is called overrun state).

There are the following two reasons for using a pulley apparatus with built-in roller clutch constructed as described above in an alternator. The first reason is to increase the life of the endless belt. For example, when the drive engine is a diesel engine or direct-injection gasoline engine, there are large changes in rotation angle speed of the crankshaft when rotating at low rpm such as during idling. As a result, the running speed of the endless belt that runs around the follower pulley also changes small. On the other hand, rotation of the rotating shaft 3 of the alternator that is rotated and driven by the endless belt via the follower pulley does not change so suddenly due to the inertial mass of the rotating shaft 3 and the rotor etc. fixed to the rotating shaft 3. Therefore, when the follower pulley is simply fixed with respect to the rotating shaft, there is a tendency for friction to occur in both directions between the endless belt and follower pulley due to changes in the rotation angle speed of the crankshaft. As a result, stress is applied repeatedly in differing directions on the endless belt that rubs against the follower pulley, which makes it easy for slipping to occur between the endless belt and the follower pulley, or becomes the cause of decreased life of the endless belt.

Therefore, when there is a tendency for the running speed of the endless belt to be fixed or to increase by using the pulley apparatus with built-in roller clutch described above as the follower pulley, the rotation force is freely transmitted from the follower pulley to the rotating shaft 3, and conversely, when there is a tendency for the running speed of the endless belt to decrease, the follower pulley rotates freely with respect to the rotating shaft. In other words, when there is a tendency for the running speed of the endless belt to decrease, the rotation angle speed of the follower pulley becomes slower than the rotation angle speed of the rotating shaft, so as to prevent strong rubbing from occurring at the area of contact between the endless belt and the follower pulley. In this way, the direction of the stress that acts on the section of rubbing between the endless belt and the follower pulley becomes constant, and it is possible to prevent slipping between the endless belt and the follower pulley, or to prevent a decrease in the life of the endless belt.

The second reason is to improve the power generating efficiency of the alternator. The drive engine of the automobile rotates and drives the rotating shaft 3, to which the alternator rotor is fixed, by way of the endless belt and follower pulley. In the case of using a fixed type follower pulley, when the rpm of the drive engine decreases suddenly, the rpm of the rotor also decreases suddenly, as well as does the amount of power generated by the alternator. However, in the case of using a pulley apparatus with built-in roller clutch as described above as the follower pulley of the alternator, the rpm of the rotor decreases gradually due to inertial forces and power generation continues even when the rpm of the drive engine decreases suddenly. As a result, it is possible to more efficiently use the kinetic energy of the rotating shaft and rotor and to increase the amount of power generated by the alternator more than in the case of using the fixed-type follower pulley.

The explanation above is made for the case of when the pulley apparatus with built-in roller clutch was located on the side of the follower pulley, however, similar function and effects can be obtained when a pulley apparatus with built-in roller clutch, having the same construction as described above, is located on the end of crankshaft on the drive side.

In the aforementioned documents that describe a prior art pulley apparatus with built-in roller clutch, including the prior art construction described above, however, there was nothing particularly mentioned about a method for more efficiently assembling this pulley apparatus with built-in roller clutch, with the construction capable of maintaining the durability and reliability of the pulley apparatus with built-in roller clutch,.

Taking this into consideration, it is an object of this invention to provide an assembly method that makes it possible to easily assemble a pulley apparatus with built-in roller clutch that is sufficiently durable and reliable.

### Disclosure of the Invention

The pulley apparatus with built-in roller clutch which is the object of the assembling method according to the present invention comprises a pulley member, a rotating shaft member that is a rotating shaft member, a roller clutch, a first ball bearing and a second ball bearing.

Of these, the pulley member has a substantially cylindrical shape such that an endless belt can freely run around its outer peripheral surface.

The rotating shaft member is located on the radially inner side of the pulley member such that it is concentric with the pulley member.

The roller clutch is located between the inner peripheral surface in the middle in the axial direction of the pulley member and the outer peripheral surface in the middle in the axial direction of the rotating shaft member, and transmits rotating force on only one direction between the pulley and the rotating shaft, or in other words, becomes locked in one direction of rotation, and becomes unlocked in the other direction.

This kind of roller clutch comprises an outer clutch-race-like section on the outer periphery, an inner clutch-race section on the inner periphery, a retainer, a plurality of rollers, a plurality of springs, a falling-prevention means, and a first and second fitting sections.

Of these, the outer clutch-race-like section is located on the inner periphery in the middle section in the axial direction of the pulley member.

Also, the inner clutch-race-like section is located on the outer periphery in the middle section in the axial direction of the rotating shaft member, and the outer peripheral surface of this inner clutch-race-like section is formed such that it is undulated around the circumferential direction, and this becomes a cam section or cam surface.

The retainer is located between the outer peripheral surface of the inner clutch-race-like section and the inner peripheral surface of the outer clutch-race-like section, and comprises a plurality of pockets.

The rollers are held in the retainer pockets such that they can roll and move freely in the circumferential direction of the retainer.

The springs are located between the rollers and the retainer, in other words, they fit in the retainer and push the rollers in the same circumferential direction with respect to the retainer.

The falling-prevention means is located in part of the retainer, and prevents the rollers that are held in the pockets from coming out of the pockets and dropping inside in the radial direction of the retainer.

Of the first and second fitting sections, the first fitting section is located in the retainer, and by fitting with the second fitting section located on the inner clutch-race-like section, it prevents the retainer from rotating relative to the inner clutch-race-like section.

The first ball bearing is located between the inner peripheral section of one end in the axial direction of the pulley member, and the outer peripheral section of one end in the axial direction of the rotating shaft section, so as to support radial loads and axial loads that are applied between the pulley member and the rotating shaft member. The outer diameter section of the first ball bearing is located on the inner peripheral section of one end in the axial direction of the pulley member, and a first outer-raceway is formed around the inner peripheral surface of this outer diameter section. Moreover, the inner diameter section of the first ball bearing is located on the outer peripheral section of one end in the axial direction of the rotating shaft member, and a first inner-raceway is formed around the outer peripheral surface of this inner diameter section. Furthermore, a plurality of first balls is located between the first inner-raceway and first outer-raceway such that they can roll freely.

The second ball bearing is located between the inner peripheral surface of the other end in the axial direction of the pulley member and the outer peripheral surface of the other end in the axial direction of the rotating shaft member, so as to support radial loads and axial loads that are applied between the pulley member and rotating shaft member. This second ball bearing comprises an outer bearing race that fits around the inner peripheral surface on the other end in the axial direction of the pulley member and an inner bearing race that fits around the outer peripheral surface on the other end in the axial direction of the rotating shaft member, and a plurality of second balls which are located between a second outer-raceway that is formed around the inner peripheral surface of the outer bearing race and a second inner-raceway that is formed around the outer peripheral surface of the inner bearing race, such that they can roll freely. Also, the shaft member unit, or in other words, the rotating shaft unit comprises the rotating shaft member and the inner bearing race.

Moreover, the rotating shaft unit has a plurality of stepped sections around its outer peripheral surface. By fitting two of these stepped sections with part of the retainer, displacement of the retainer in the axial direction is suppressed.

Furthermore, the assembly method for assembling the pulley apparatus with built-in roller clutch according to a feature of this invention is a method for assembling the pulley apparatus with built-in roller clutch described above, and first, the rollers are placed and held in the respective pockets of the retainer of the roller clutch, then when these rollers are pressed to one side in the circumferential direction of the pockets by the springs, the rollers together with the retainer are installed around the radially inner side of the outer clutch-race-like section to form an assembled unit.

Then, in order to install the inner clutch-race-like section of the roller clutch on the radially inside of the rollers and springs held in the retainer, the cam section in the radially inner portion of the roller clutch is aligned in phase with the rollers of the assembly, and the radially inner portion of the roller clutch is inserted below the rollers (to the radially inside portion of the rollers). And then, either one of the retainer of the roller clutch of the assembly and the radially inner porition of the roller clutch is fixed with a jig with the other rotated to compress the springs at the same time, so that rollers are moved to a portion with a small outer-diameter of the concave section of the cam portion on the outer peripheral surface of the inner clutch-race- like section.

In this state, the retainer is displaced relative to the inner clutch-race-like section in the axial direction for engagement between the first and second fitting portions to form the roller clutch.

The roller clutch assembled in this way is installed between the inner peripheral portion in the middle portion in the axial direction of the pulley member and the outer peripheral portion in the middle portion in the axial direction of the rotating shaft member, and then the second ball bearing is installed between the inner peripheral portion in the other end in the axial direction of the pulley member and the outer peripheral portion in the other end in the axial direction of the rotating shaft member.

Before assembling the second ball bearing, the first ball bearing is assembled between the inner peripheral section of the one end in the axial direction of the pulley member and the outer peripheral section of the one end in the axial direction of the rotating shaft member. The first ball bearing may be assembled before or after assembling the roller clutch.

The work of securing the second ball bearing that is assembled in the section between the inner peripheral surface of the other end in the axial direction of the pulley member and the outer peripheral surface of the other end in the axial direction of the rotating shaft member is performed by a method such as pressure fitting, crimping, welding or using adhesive.

In the case of the method of assembling the pulley apparatus with built-in roller clutch according to the second feature of the present invention, at least one of the first fitting section and second fitting section is provided with a beveled section. The beveled section is provided such that as the clutch retainer is brought axially close to the inner clutch-race-like section to make the first fitting section and second fitting section engaged with each other, the clutch retainer is rotated relative to the inner clutch-race-like section to simultaneously compress the springs.

In the case of assembling the pulley apparatus with built-in roller clutch having such a beveled section, after the assembly has been assembled as in the assembling method according to the first feature as mentioned above, the concave portion of the cam section formed in the outer peripheral surface of the inner clutch-like-section is aligned in the circumferential phase with the rollers of the assembly, and in this state, the inner clutch-like section is inserted on the radially inside of the rollers of the assembly, or below the rollers of the assembly.

Then, as the inserting operation is continued, the first fitting section is engaged with the second fitting section utilizing the beveled section, the springs are simultaneously compressed with the radially inner section of the roller clutch located on the radially inside of the assembly to form the roller clutch.

Then, the second ball bearing is installed between the inner peripheral surface at the other end in the axial direction of the pulley member and the outer peripheral surface at the other end in the axial direction of the rotating shaft member, as in the assembling method according to the first feature as mentioned above.

With the method of assembling the pulley apparatus with built-in roller clutch as mentioned above, it is possible to maintain sufficient durability and reliability of the pulley apparatus, as well as make it possible to perform assembly more easily.

First, the function and effect that makes it possible to maintain the sufficient durability and reliability is obtained by suppressing axial displacement of the retainer by fitting part of the retainer with a plurality of stepped sections formed around on the outer peripheral surface of the rotating shaft unit. In other words, since displacement of the retainer in the axial direction is suppressed by engagement between part of the retainer and the stepped sections, the end surface in the axial direction of this retainer never comes in contact with any part of the outer clutch race and other parts that rotate together with the pulley member. The retainer is assembled such that it is prevented from rotating relative to the inner clutch-race-like section that is fastened around the outer peripheral surface of the rotating shaft member. Therefore, the pulley member and the retainer rotate relative to each other when the roller clutch is in the overrun state (when the connection is broken). As a results, if the end surface in the axial direction of the retainer comes in contact with any part of the outer clutch race or the parts that rotate together with the pulley member, the temperature of the roller clutch rises due to friction heat caused by rubbing of the contact portions during overrun. Also, when this temperature rise becomes severe, the grease inside the roller clutch will degrade and cause the roller clutch to lose any protection against seizure, and thus it becomes difficult to obtain sufficient durability.

On the other hand, in the case of the pulley apparatus with built-in roller clutch assembled by way of the assembling method according to this invention, there is no relative rotation of the retainer with respect to the rotating shaft unit even during overrun while the retainer is prevented from displacement in the axial direction, so that strong rubbing between the surface of the retainer and the mating surface such as part of the outer clutch-race-like section is prevented during overrun, and thus it is possible to maintain durability by suppressing the occurrence of friction heat during overrun and preventing degradation of the grease. Moreover, since the retainer and inner clutch-race-like section are effectively prevented from displacement in the axial direction, it is possible to prevent the rolling surface of the rollers held in the retainer from coming out in the axial direction from the cam surface formed around the outer peripheral surface of the inner clutch-race-like section. Therefore, it is possible to securely prevent edge loading from being applied to the rolling surfaces of the rollers, which would otherwise be caused as part of the rolling surfaces comes in contact with the axial end edge of the cam surface, and thus it is possible to prevent a decrease in the rolling contact fatigue life of these rolling surfaces and it is possible to improve the durability of these surfaces.

Simplification of assembly is made possible by using the falling-prevention means, and by simultaneously compressing the springs.

First, the falling-prevention means prevents the rollers held in the pockets of the retainer from falling inside in the radial direction of retainer, so it is possible to more easily perform the work of inserting the inner clutch-race-like section on the radially inner side of the rollers held in the pockets of the retainer beforehand. In other words, when there is no falling-prevention means, all or some of the rollers held in the pockets would greatly protrude or fall radially inside the retainer, making it difficult to insert the inner clutch-race-like section on the radially inner side of the retainer. However, in the case of this invention, it is possible with the falling-prevention means to prevent the rollers from greatly protruding or falling radially inside the retainer when inserting the inner clutch-race-like section, and thus it is possible to more easily perform the installation work. In other words, as to the retainer for the roller clutch of this invention, a single retainer performs two positioning functions, or in other words, it prevents the rollers from greatly protruding or falling radially inside the retainer during assembly, and prevents the retainer itself from moving in the axial direction during operation, so that it is capable of simplifying the assembly work and maintaining the durability and reliability of the pulley apparatus.

Second, the work of fitting the inner clutch-race-like section on the inside of the rollers that are arranged on the radially inside of the outer clutch-race-like section, and fitting the first fitting section in the retainer with the second fitting section in the inner clutch-like-section, can be performed even more easily by simultaneously compressing the springs which press the rollers. In other words, as the inner roller-clutch-like section is rotated relative to the clutch retainer in the first feature of the present invention, and as the first fitting section is engaged with the second fitting section utilizing the beveled section in the second feature of the present invention, the springs are simultaneously compressed.

In the state before the first fitting section is engaged with the second fitting section, the rollers compressed by the springs can be aligned in phase with the concave portions in the cam section formed in the outer peripheral surface of the inner clutch-like-section, and in addition there is the falling-prevention means for the rollers, so the operation to insert the inner clutch-like-section on the radially inside of the rollers can be conducted with no particular problem. Specifically, the retainer, rollers and springs are installed on the radially inside of the outer clutch-like-section to form an assembly, and then the inner clutch-like-section is inserted on the radially inside of the rollers with the rollers aligned in phase with the concave portions, which operation can be conducted without any particular problem because of the falling-prevention means for the rollers. In the present invention, after this, utilizing the relative rotation (in the case of the first feature) or the beveled section (in the second feature), the first fitting section is engaged with the second fitting section. With the series of operations, the rollers are moved to a predetermined location in the circumferential direction between the inner peripheral surface of the outer clutch-like-section and the outer peripheral surface of the inner clutch-like-section (for example, a portion near the outer periphery of the concave portion of the cam surface simultaneously in contact with the inner peripheral surface of the outer clutch-like-section and the outer peripheral surface of the inner clutch-like-section) to form the roller clutch.

As mentioned above, according to the method of assembling the pulley apparatus with built-in roller clutch of the present invention, since all the rollers are simultaneously moved to a specified position against the elastic force of the springs, it is easy to assemble the roller clutch. Thus, moving the rollers simultaneously by the cam surface in the circumferential direction against the elastic force of the springs in this way means that the rollers are moved to a specified position in the circumferential direction between the inner peripheral surface of the outer clutch-race-like section and the outer peripheral surface of the inner clutch-race-like section as described above. It is possible by moving the rollers to a specified position between both of the aforementioned peripheral surfaces in this way that rotating force is freely transmitted between the outer clutch-race-like section and inner clutch-race-like section.

In short, in the case of this invention, the falling-prevention means prevents the rollers, installed in the retainer, from greatly protruding or falling radially inside the retainer, and thus makes it easier to perform the work of inserting the inner clutch-race-like section on the radially inner side of the rollers. Also, with the relative rotation between the clutch retainer and the inner clutch-race-like section (in the case of the first feature) or with the beveled section provided in the first and second fitting sections (in the case of the second feature), when the inner clutch-race-like section is inserted on the radially inside of the rollers, the rollers are all moved to their specified position at the same time in the circumferential direction of the inner clutch-race-like section. Therefore, the work of compressing the respective springs independently when assembling a structure with the rollers and springs installed in it, which was very troublesome work to perform, is not required so that the assembling operation of the pulley apparatus with built-in roller clutch can be conducted easily and efficiently.

To say again, in the case of this invention, through the function of the falling-prevention means that is formed on the retainer of the roller clutch, the rollers are kept from moving radially inside the retainer, and thus it becomes easier to insert the inner clutch-race-like section into the radially inner section of the retainer. Also, the springs are all compressed at the same time, and the rollers are all moved to their specified position at the same time. Therefore, the work of moving the rollers against the elastic force of the springs to a specified position, which up until now was very troublesome work to perform because of the plurality of rollers and springs, can be performed easily. In other words, in regards to the assembly of the retainer, rollers, springs and inner clutch-race-like section, the work of simultaneously compressing the springs and moving the rollers to their specified position is also easy to perform.

### Brief Description of the Drawings

Fig. 1 is a cross sectional view to show an example of the conventional alternator.
Fig. 2 is a cross sectional view of a half of an example of the conventional structure of the pulley apparatus with built-in roller clutch.
Fig. 3 is a perspective view of part of the inner clutch race.
Fig. 4 is a perspective view of part of the clutch retainer.
Fig. 5 is a side elevational view of part of the inner clutch race and the clutch retainer.
Fig. 6 is a perspective view of an example of the spring mounted to a clutch retainer.
Fig. 7 is a cross sectional view of a half of a second example of the conventional structure of the pulley apparatus with built-in roller clutch.
Fig. 8 is a view of a roller clutch only taken from right in Fig.7.
Fig. 9 is a view to show a cross sectional view of a half of a first example of the embodiment of the pulley apparatus with built-in roller clutch according to the present invention.
Fig. 10 is a cross sectional view to show a first example of the falling-prevention means for preventing the rollers from falling off radially inward from the pockets of the clutch retainer..
Fig. 11 is a cross sectional brief view to show an example of the assembling process of a first example of the embodiment of the present invention.
Fig. 12 is an enlarged, cross sectional view taken along the line XII-XII in Fig. 9 to show the steps to insert the inner clutch race on the radially inside of the rollers, wherein (A) shows an initial stage while (B) shows a final stage.
Fig. 13 is a cross sectional view of a half of a second example of the embodiment of the pulley apparatus with built-in roller clutch according to the present invention.
Fig. 14 is a cross sectional brief view of an example of the assembling process of a second example of the embodiment of the present invention.
Fig. 15 is a cross sectional view of a half of a third example of the embodiment of the pulley apparatus with built-in roller clutch according to the present invention.
Fig. 16 is a cross sectional view of a half of a fourth example of the embodiment of the pulley apparatus with built-in roller clutch according to the present invention.
Fig. 17 is a cross sectional view of a half of a fifth example of the embodiment of the pulley apparatus with built-in roller clutch according to the present invention.
Fig. 18 is a cross sectional view of a half of a sixth example of the embodiment of the pulley apparatus with built-in roller clutch according to the present invention.
Fig. 19 is a cross sectional brief view of another twelve examples of the structure to prevent displacement in the axial direction of the clutch retainer.
Fig. 20 is a cross sectional brief view of another thirteen examples of the structure to prevent displacement in the axial direction of the clutch retainer.
Fig. 21 is a cross sectional brief view of another six examples of the structure to prevent displacement in the axial direction of the clutch retainer.
Fig. 22 is a cross sectional brief view of another two examples of the structure to prevent displacement in the axial direction of the clutch retainer.
Fig. 23 is a cross sectional brief view to show a second example of the falling-prevention means for preventing the rollers from falling off radially inward from the pockets of the clutch retainer.
Fig. 24 is a cross sectional brief view to show a third example of the falling-prevention means for preventing the rollers from falling off radially inward from the pockets of the clutch retainer.
Fig. 25 is a cross sectional view to show a fourth example of the means for preventing the rollers from falling off radially inward from the pockets of the clutch retainer, where (A) is a cross sectional brief view, and (B) is a view taken from the lower side of (A) with the rollers removed.
Fig. 26 is a cross sectional view to show a fifth example of the means for preventing the rollers from falling off radially inward from the pockets of the clutch retainer, where (A) is a cross sectional brief view, and (B) is a cross sectional view taken along the line XXVI-XXVI in (A).
Fig. 27 is a cross sectional view to show a sixth example of the falling-prevention means for preventing the rollers from falling off radially inward from the pockets of the clutch retainer.
Fig. 28 is a cross sectional brief view to show a seventh example of the falling-prevention means for preventing the rollers from falling off radially inward from the pockets of the clutch retainer.
Fig. 29 is a cross sectional brief view to show an eighth example of the falling-prevention means for preventing the rollers from falling off radially inward from the pockets of the clutch retainer.
Fig. 30 is a cross sectional view of part of the clutch retainer and inner clutch race of a seventh example of the embodiment according to the present invention.
Fig. 31 is a view taken in the direction of Arrow XXXI.

### Description of the Preferred Embodiments

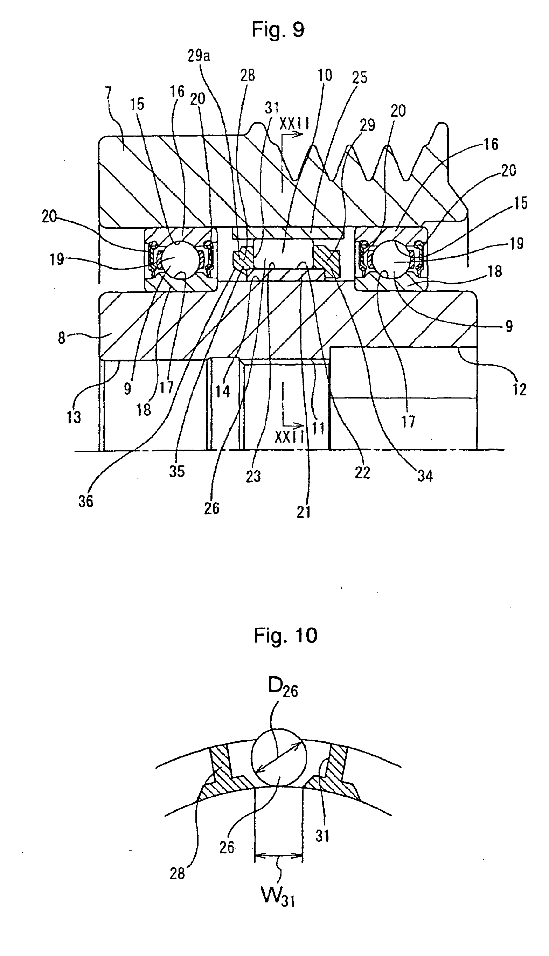

Figs. 9 to 12 show a first example of the embodiment according to a first feature of the invention. A feature of this invention is that it prevents rubbing between the clutch retainer 28 and the sections that rotate together with the follower pulley 7 during the overrun state to suppress any temperature rise due to friction heat, and thus improves durability, and it simplifies the work of assembling the roller clutch 10 on the radially inner side of the follower pulley 7. The other construction and functions are substantially the same as those of the prior construction shown in Figs. 2 to 6, so the same reference numbers will be_given to identical parts and any redundant explanation of will be omitted. This explanation will center mainly on the features of this invention and those parts that differ from the prior art construction. Incidentally, in the case of the clutch retainer 28 used in working the present example, with a pair of rim portions 29a, 29b provided on the opposite ends in the axial direction, only the rim portion 29b on the rear side in the inserting direction during assembling (right in Fig. 9) is provided with the fitting projection 32 (see Figs. 2 to 6) on its inner peripheral surface. The rim portion 29a on the front side in the inserting direction (left in Fig. 9) is provided with no fitting projection.

First, the construction of the part that suppresses displacement of the clutch retainer 28 in the axial direction in order to suppress a rise in temperature will be explained. This clutch retainer 28 is formed by injection molding of a synthetic resin having sufficient elasticity, and has a fitting brim section 34 in an inward facing flange shape that is formed all the way around or intermittently around the circumferential direction on one end in the axial direction (right end in Fig. 9). On the other hand, one or a plurality of fitting protrusions 35 that protrude inward in the radial direction are formed intermittently around in the circumferential direction of the other end in the axial direction of the clutch retainer 28. The inner peripheral surface of the fitting protrusions 35 is inclined outward in the radial direction toward the axial tip end and act as inclined guide surfaces 36. Also, stepped sections (the first feature) are formed on both ends in the axial direction of the inner clutch-race 21 of the roller clutch 10 which is interference-fitted onto the outer peripheral surface in the middle of rotating shaft member or sleeve 8. Displacement in the axial direction of the clutch retainer 28 is suppressed by fitting both end surfaces in the axial direction of the inner clutch-race 21 with the fitting brim section 34 and the fitting protrusions 35 at their mating surfaces.

Next, Fig. 10 will be used to explain the falling-prevention means for preventing the rollers 26 from falling out of the pockets 31 of the clutch retainer 28 inward in the radial direction of the clutch retainer 28. As shown in Fig. 10, the rollers 26 are held in the pockets 31 formed in the clutch retainer 28 such that they can roll freely and move freely in the circumferential direction of the clutch retainer 28. Of the openings of the pockets 31, the width W₃₁ in the circumferential direction of the opening on the inner diameter side of the clutch retainer 28 is smaller than the diameter D₂₆ of the rollers (W₃₁ < D₂₆). Therefore, the rollers 26 cannot pass through the openings on the inner-diameter side, and thus the rollers 26 do not fall inward in the radial direction of the clutch retainer 28.

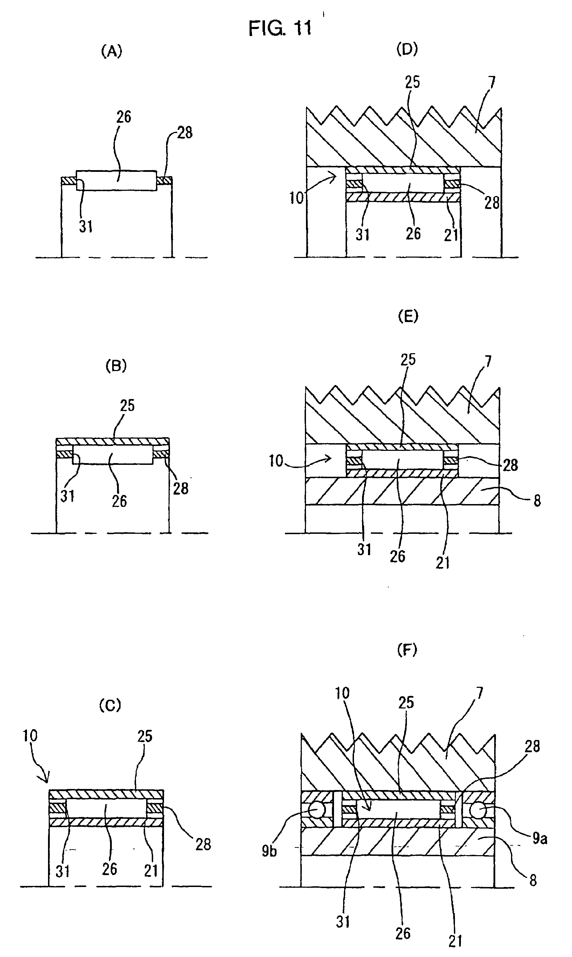

The work of assembling the components of the pulley apparatus with built-in roller clutch of this example of the invention is performed, for example, as shown in Figs. 11. First, as shown in Fig. 11(A), the springs 33 (see Fig. 6) are mounted in the clutch retainer 28, and the rollers 26 are held in the pockets 31 that are formed in the clutch retainer 28. In this state, the springs 33 press the rollers 26 against one end in the circumferential direction of the pockets 31. Also, in this state, the rollers 26 are prevented from falling into the inner-diameter side of the clutch retainer 28 by the falling-prevention means as shown in Fig. 10. The rollers 26, springs 33 and clutch retainer 28 are installed around the radially inner side of the inner clutch-race 21 as shown in Fig. 11(B).

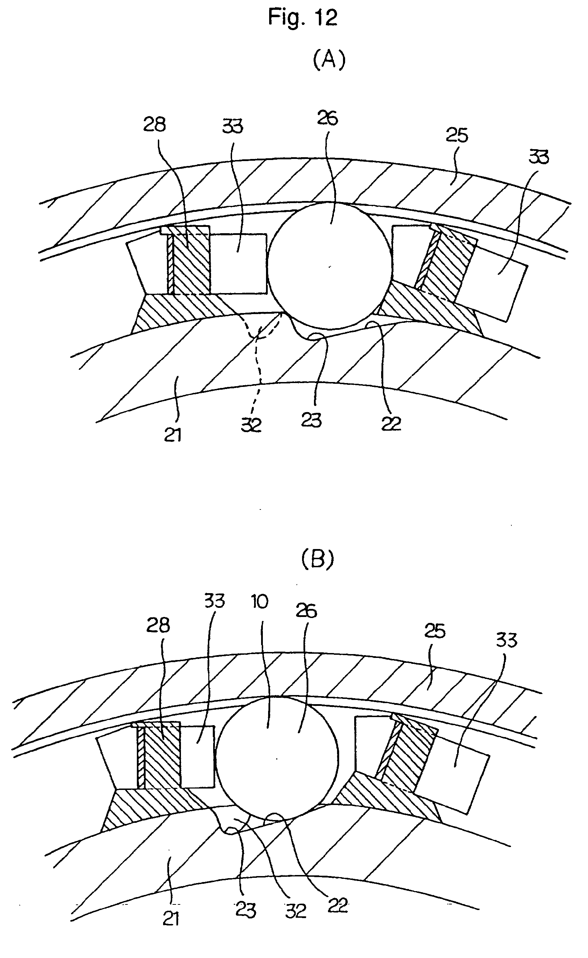

After that, as shown in Fig. 11(C), the inner clutch-race 21 is installed on the radially inner side of the rollers 26. When installing the inner clutch-race 21, one of the clutch retainer 28 of the assembly and the inner clutch race 21 is fixed by a jig with the other rotated, and the springs 33 are simultaneously compressed. Specifically, in the state where the rollers 26, springs 33 and clutch retainer 28 are simply installed on the radially inner side of the outer clutch race 25, the rollers 26 are pressed by the springs 33, as shown in Fig. 12 (A), to be displaced in the circumferential direction. In this state, as shown in Fig. 12 (A), it is possible to place the rollers 26 in alignment in phase with the concave portion 23 of the cam surface 22 on the outer peripheral surface of the inner clutch-race 21, so that the inner clutch race 21 is inserted radially into the inside of the rollers 26 in a degree by resiliently deforming the fitting protrusion 35. However, it is impossible to completely insert the inner clutch-race 21 radially into the inside of the rollers 26 to make the fitting projection 32 on the inner peripheral surface of the rim portion 29 of the clutch retainer 28 engaged with the concave portion 23 of the cam surface 22 on the outer peripheral surface of the inner clutch-race 21.

Therefore, in this example, as shown in Fig. 12( B), the inner clutch race 21 is inserted radially into the inside of the rollers 26 in a degree (to a midway), the inner clutch-race 21 is rotated relative to the clutch retainer 28 to compress the springs 33. Specifically, one member 21 (or 28) of the inner clutch-race 21 and the clutch retainer 28 is fixed by a jig while the other member 28 (or 21) is rotated. In this state, since the rollers 26 are engaged with the cam surface 22, the rollers 26 simultaneously compress the springs 33. Then, after the both members 21, 28 are rotated relative to each other until the fitting projection 32 is in alignment in phase with the concave portion 23, the inner clutch race 21 is further inserted on the radially inner side of the rollers 26, so that the first fitting portion or fitting protrusion 32 is engaged with the second fitting portion or concave portion 23. In this state, the roller clutch 10 is completely assembled.

As shown in Fig. 11(D), the roller clutch 10 that is assembled in this way is installed around the inner peripheral surface in the middle section in the axial direction of the follower pulley 7 by interference-fitting the outer clutch-race 25 into the follower pulley 7. Then, as shown in Fig. 11(E), the inner clutch-race 21 is interference-fitted onto the sleeve 8 to install the inner clutch race 21 around the outer peripheral surface of the middle section in the axial direction of the sleeve 8. In this state, the roller clutch 10 is assembled between the inner peripheral surface in the middle section of the follower pulley 7 and the outer peripheral surface in the middle section of the sleeve 8.

Finally, as shown in Fig. 11(F), the first and second ball bearings 9a, 9b are installed in the section between the inner peripheral surface of both end sections in the axial direction of the follower pulley 7 and the outer peripheral surface of both end sections of the sleeve 8 and located on both sides in the axial direction of roller clutch 10. In this state, the pulley apparatus with built-in roller clutch as shown in Fig. 9 is completely assembled.

The feature of the assembly method of this invention is in the process of assembling the inner clutch-race 21 on the inner diameter side of the clutch retainer 28, rollers 26 and springs 33 that were assembled beforehand radially around the inside of the outer clutch-race 25 in order to assemble the roller clutch 10. The other processes are not limited to the order shown in Fig. 11 and can be changed as appropriate. For example, it is possible to assemble clutch retainer 28, rollers 26, springs 33 and inner clutch-race 21 around the radially inner side of the outer clutch-race 25 that has already been securely fitted and fastened beforehand radially around the inner peripheral surface of the middle section in the axial direction of the follower pulley 7. Furthermore, one of the pair of ball bearings 9a, 9b may be installed between the inner peripheral surface of the follower pulley 7 and the outer peripheral surface of the sleeve 8 before assembling the roller clutch 10.

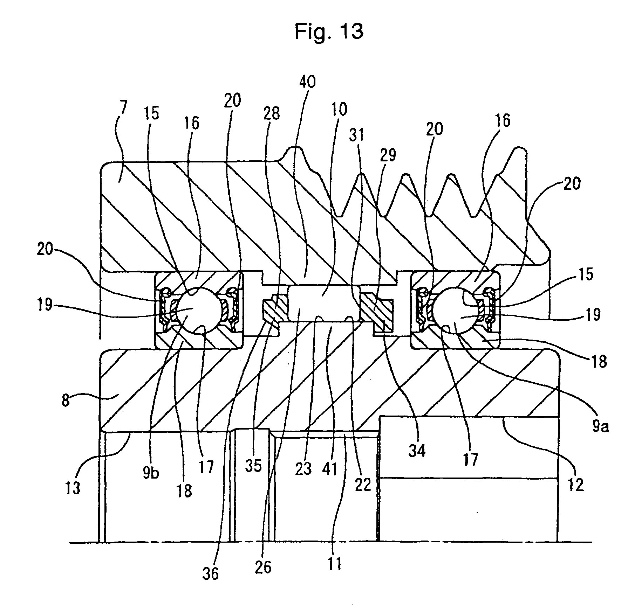

Next, Figs. 13 - 14 show a second example of the embodiment of the invention. In this example, there are an outer clutch race-like section 40 of the roller clutch 10 integrated into a single member with the follower pulley 7, and an inner clutch-race-like section 41 integrated into a single member with the sleeve 8.

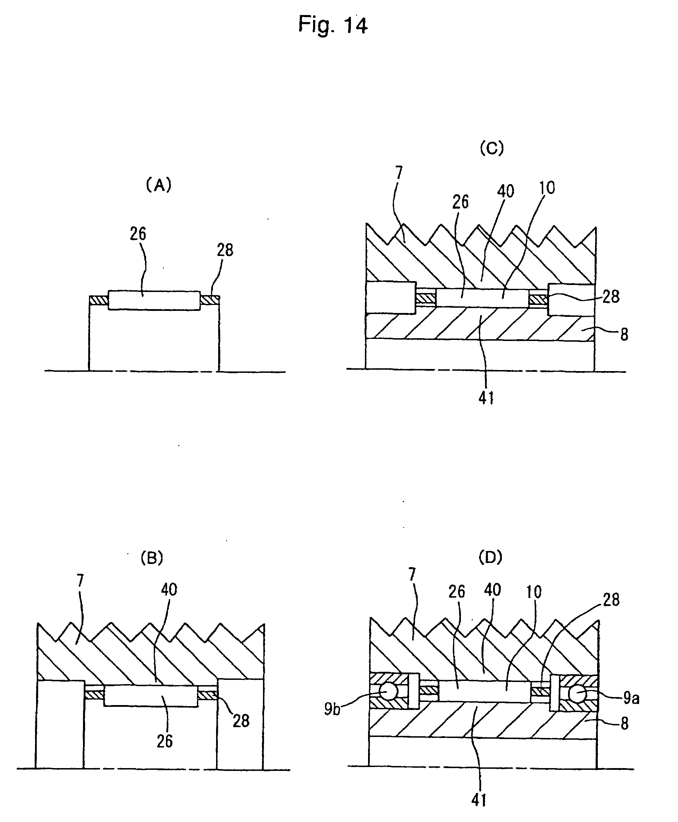

As shown in Fig. 14 (A), in the case of assembling the construction of this example, after the rollers 26 and springs have been assembled in the clutch retainer 28, these members are assembled radially around the inside of the pulley 7 as shown in Fig. 14 (B). Then, as shown in Fig. 14(C), the inner clutch-race-like section 41 is installed around the radially inner side of the rollers 26 to form the roller clutch 10, and then the pair of ball bearings 9a, 9b are installed on both sides of the roller clutch 10 as shown in Fig. 14 (D).

The construction and functions of the other parts are substantially the same as those in the first example described above, so any redundant drawings and explanations will are omitted.

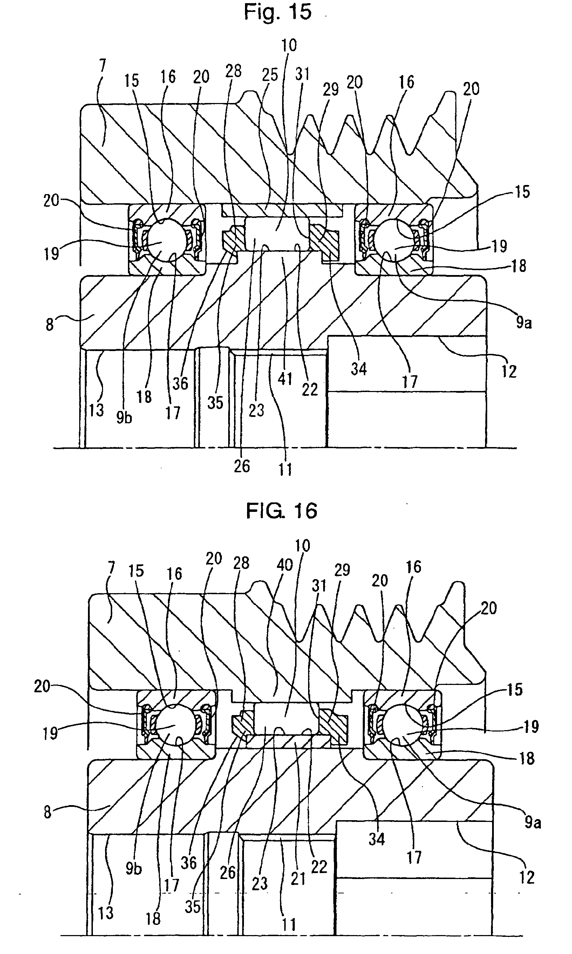

Next, Figs. 15 to 18 show another four examples of the construction in third thru sixth examples of the embodiment of the invention to which the assembly process of the present invention is applied.

First, in the case of the third example shown in Fig. 15, the outer clutch-race 25 is fitted and fastened to the inner peripheral surface in the middle section in the axial direction of the follower pulley 7, and the inner clutch-race-like section 41 is integrally formed around the outer peripheral surface in the middle section in the axial direction of the sleeve 8.

Next, in the case of the fourth example shown in Fig. 16, the inner clutch race 21 is fitted and fastened onto the outer peripheral surface in the middle section in the axial direction of the sleeve 8, and the outer clutch-race-like section 40 is integrally formed around the inner peripheral surface in the middle section in the axial direction of the follower pulley 7.

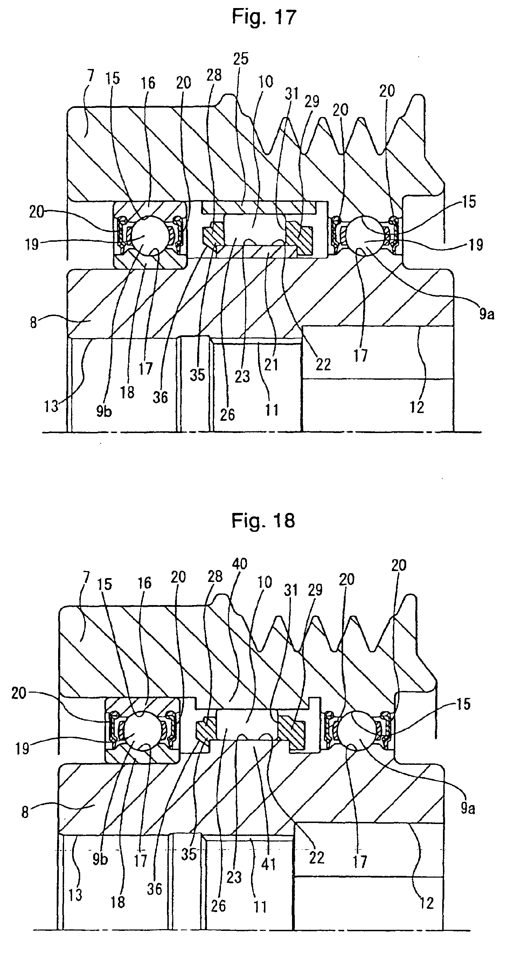

Next, in the case of the fifth example shown in Fig. 17, the sleeve 8 integrally has a member corresponding to the inner race of the first ball bearing 9a, and the follower pulley 7 integrally has a member corresponding to the outer race.

Furthermore, in the case of the sixth example shown in Fig. 18, the outer clutch-race-like section 40 of the roller clutch 10 is integrated with the follower pulley 7 while the inner clutch-race-like section 41 is integrated with the sleeve 8, and further the sleeve 8 has integrally a member corresponding to the inner race of the first ball bearing 9a while the follower pulley 7 has integrally a member corresponding to the outer race.

The construction and functions of the other parts of the third to sixth examples in Figs. 15 - 18 are substantially the same as those of the first and second embodiment described above and any redundant drawings or explanations are omitted.

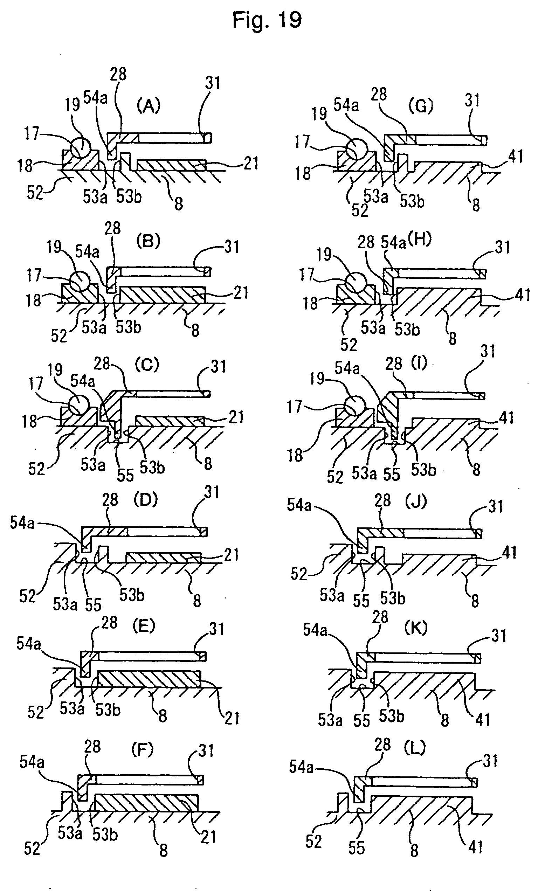

Next, Figs. 19 to 21 are used to explain other examples of the construction of the part that suppresses displacement in the axial direction of the clutch retainer 28 by fitting with part of the clutch retainer 28 a plurality of stepped sections 53a, 53b, which are formed around the outer peripheral surface of the rotating shaft unit 52 that is made by fastening or integrating the inner race 18 of at least one of the ball bearings 9a, 9b around the outside of the rotating shaft member 8. The stepped sections that are formed around the outer peripheral surface of the rotating shaft unit 52 include, of course the protruding stepped sections 53 that are formed integrally on the outer peripheral surface of the rotating shaft unit 52 {for example, the stepped sections 53a, 53b as shown in Fig. 19(A)}, as well as the side surfaces of the concave groove 55 that is formed around the outer peripheral surface of the rotating shaft member 8 {for example, surfaces 53a, 53b shown in Fig. 19(C)}, and the end surfaces in the axial direction of the inner clutch-race 21 (inner clutch-race-like section 41), which is fitted and fastened around the outside of the rotating shaft member 8, and of the inner bearing races 18 of the ball bearings 9a, 9b {for example, surface 53b shown in Fig. 19(B)}.

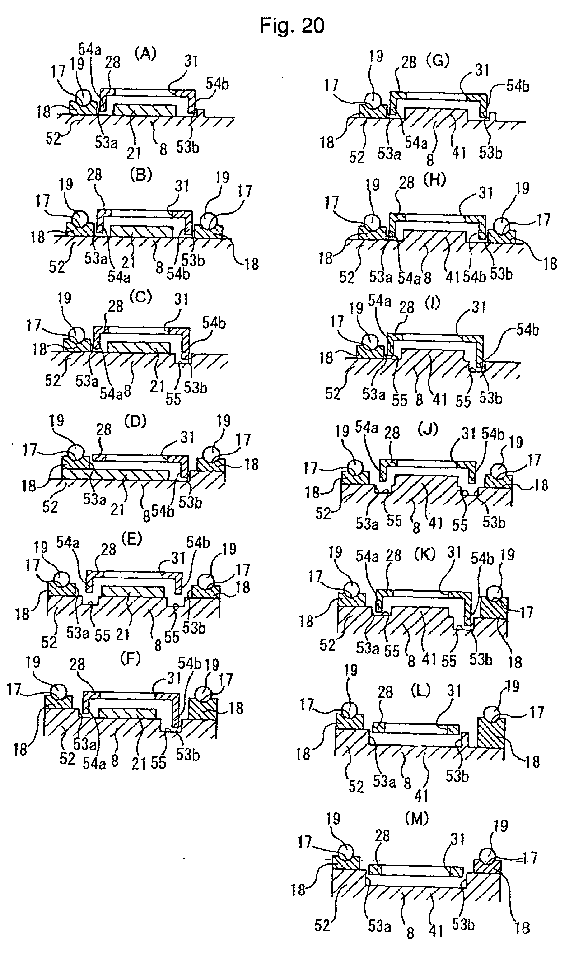

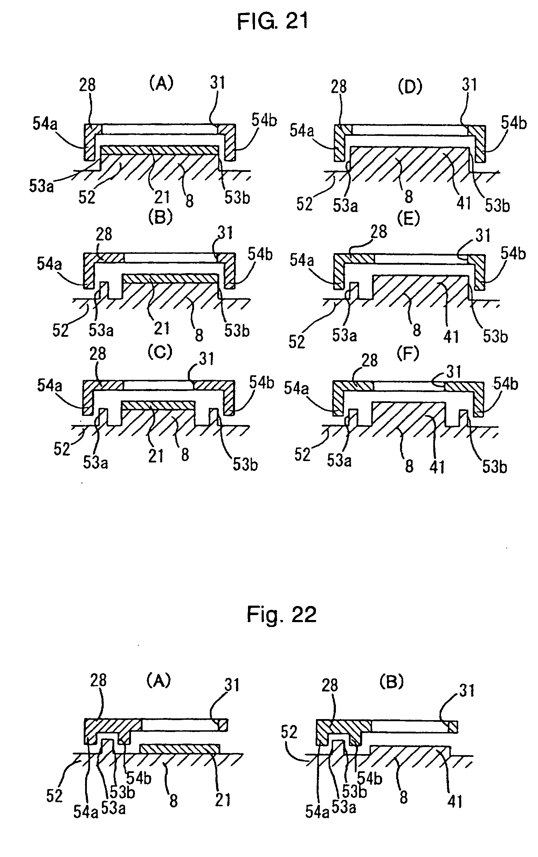

Of the construction that uses these stepped sections 53a, 53b for suppressing displacement in the axial direction of the clutch retainer 28, Figs. 19(A) to 19(L) show construction where a fitting section 54a that is bent inward in the radial direction from one end in the axial direction of the clutch retainer 28 is placed between a pair of stepped sections 53a, 53b, Figs. 20(A) to 20(M) show construction where both ends in the axial direction of the clutch retainer 28 (including fitting sections 54a, 54b bent inward in the radial direction from the ends) are placed between a pair of stepped sections 53a, 53b, Figs. 21(A) to (F) show construction where a pair of stepped sections 53a, 53b are located between a pair of fitting sections 54a, 54b that bend inward in the radial direction from the opposite ends in the axial direction of the clutch retainer 28, and Fig. 22(A) - (B) show construction where stepped sections 53a, 53b are located between a pair of fitting sections 54a, 54b that are formed on one end in the axial direction of the clutch retainer 28 to protrude inward in the radial direction.

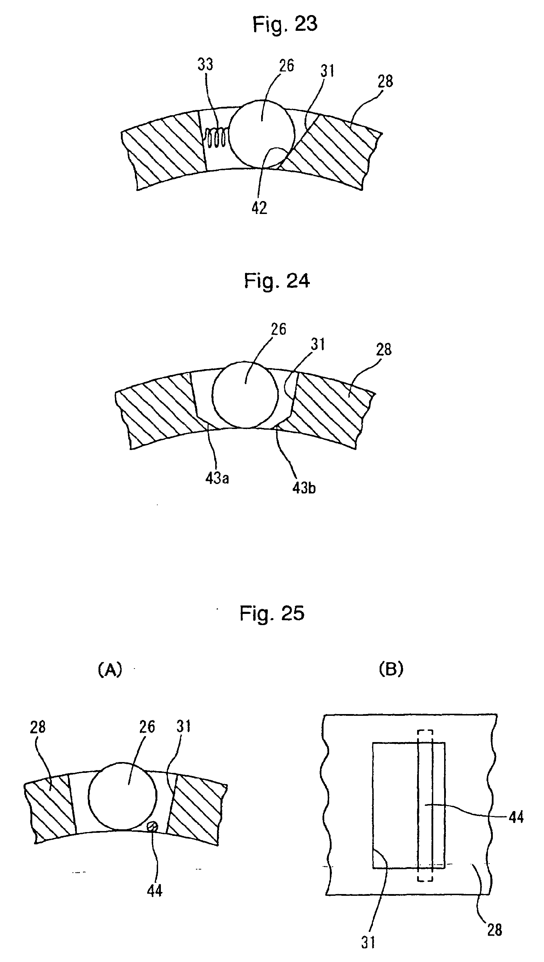

Next, Figs. 23 to 29 will be used to explain other examples of the construction of the falling-prevention means for preventing the rollers 26 that are held in the pockets 31 of the clutch retainer 28 from falling from the pockets 31 into the inner diameter side of the clutch retainer 28.

First, Fig. 23 shows construction where a spring 33 applies an elastic force on the roller 26 outward in the radial direction of the clutch retainer 28 by pressing the roller 26 against the inclined surface 42 that is the inner surface of the pocket 31.

Fig. 24 shows construction where protruding tabs 43a, 43b are formed on the opening section of the inner diameter side of the pocket 31 such that the distance between the tips of both of these tabs 43a, 43b is less than the diameter of the roller 26.

Fig. 25 shows construction where a filament-shaped wire 44 is located in the pocket 31 on the inner diameter side of the clutch retainer 28 such that it runs across in the axial direction of the pocket 31, and where the distance between this wire 44 and the opposing surface of the pocket 31 is less than the diameter of the roller 26.

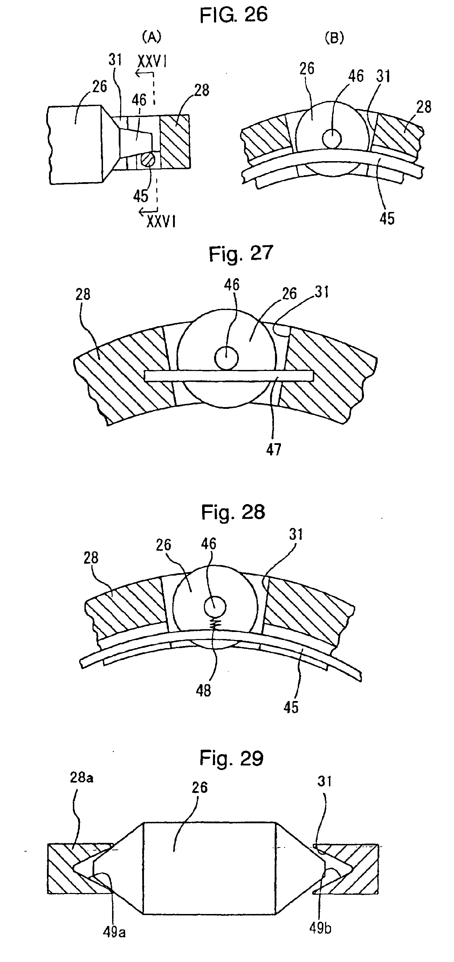

Fig. 26 shows construction where wire rings 45 are mounted to the inner peripheral surface on the opposite ends of the clutch retainer 28 and protrusions 46 are formed on the opposite ends of the roller 26 such that the engagement between the wire rings 45 and the protrusions 46 prevents the roller 26 from moving inward in the radial direction of the clutch retainer 28.

Fig. 27 shows construction where protrusions 46 are formed on the ends in the radial direction of the roller 26, and the filament-shaped wires 47 are engaged with the protrusions 46 and embedded into the ends in the axial direction of the clutch retainer 28a.

Fig. 28 shows construction where springs 48 are located between the wire rings 45 and protrusions 46 in the example shown in Fig. 26 such that they apply an elastic force on the roller 26 outward in the radial direction of the clutch retainer 28.

Fig. 29 shows construction where concave sections 49a, 49b are formed on the inner surface on both sides in the axial direction of the pockets 31 formed in the clutch retainer 28 such that both of the pointed opposite ends in the axial direction of the roller 26 fit inside these concave sections 49a, 49b.

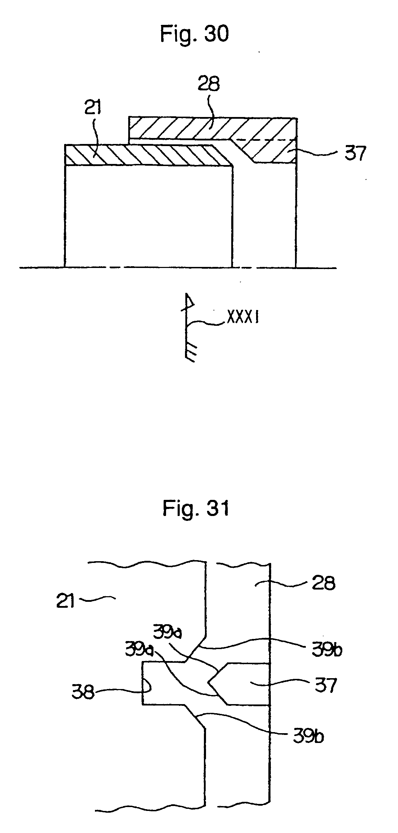

Next, Figs. 30-31 show a seventh example of the embodiment of the present invention corresponding to the second feature. The whole construction of the structure assembled in the present example is substantially the same as that in the second example of the conventional structure as shown in Figs. 7-8, so the drawings and explanations on the portions corresponding to the conventional structure are omitted. The following explanation is centered on the characteristic portions of the present invention. In the case of the first example mentioned above, at the final stage of the operation to insert the inner clutch-race on the radially inner side of the rollers of the assembly, one of the inner clutch-race and the clutch retainer is fixed by the jig with the other adapted to rotate. On the other hand, in the present example, the second fitting portion or fitting protrusion 37 and the first fitting portion or fitting notch 38 are engaged with each other at the final stage of the operation to insert the inner clutch-race 21 on the radially inner side of the rollers of the assembly, and at least one of the second fitting portion or fitting protrusion 37 and the first fitting portion or fitting notch 38 (both in the illustrated case) is formed with a beveled sections 39a, 39b, so that the fitting protrusion 37 is engaged with the fitting notch 38 by utilizing the beveled sections 39a, 39b at the final stage of the inserting operation to simultaneouly compress the springs for pressing the rollers.

Specifically, in the case of the present example, the concave portion 23 of the cam surface 22 on the outer peripheral surface of the inner clutch-race 21 is aligned in phase with the rollers 26 [see Fig. 12(A)], and in this state, the inner clutch-race 21 is inserted on the radially inner side of the rollers 26. Then, at the final stage of the inserting operation, the fitting protrusion 37 is guided by the beveled sections 39a, 39b to enter the fitting notch 38 (for engagement). At this time, the inner clutch-race 21 is rotated relative to the clutch retainer 28 to simultaneously compress the springs. And, in the state where the fitting protrusion 37 has completely entered the fitting notch 38, the rollers 26 are moved to the predetermined position between the cam surface 22 and the inner peripheral surface of the inner clutch-race 21. In this state, the roller clutch is completed, and after it, as in the first example as mentioned above, it is installed together with the first and second ball bearings between the inner peripheral surface of the follower pulley and the outer peripheral surface of the sleeve etc. to complete the pulley apparatus with built-in roller clutch.

### Industrial Applicability:

This invention is constructed and functions as described above, and provides a method of assembling a pulley apparatus with built-in roller clutch, that makes it possible to maintain durability and reliability of the pulley apparatus, as well as makes it possible to perform the assembly process more easily.

## Claims

1. A method of assembling a pulley apparatus with built-in roller clutch for use in belt transmission of an auxiliary machinery of an engine, the pulley apparatus comprising a pulley member, a shaft member provided on the radially inner side of the pulley member, a first ball bearing provided between the pulley member and the shaft member on one side in the axial direction thereof, a second ball bearing provided between the pulley member and the shaft member on the other side in the axial direction thereof, and a roller clutch provided between the pulley member and the shaft member, a. the first ball bearing comprising an outer diameter section provided in the inner peripheral portion of the pulley member and having a first outer raceway in the inner peripheral surface thereof, an inner diameter section provided in the outer peripheral portion of the shaft member and having a first inner raceway in the outer peripheral surface thereof, and a plurality of first balls provided between the first inner raceway and the first outer raceway, b. the second ball bearing comprising an outer race provided separate from the pulley member, fitted into the inner peripheral surface of the pulley member and having a second outer raceway in the inner peripheral surface thereof, an inner race fitted onto the outer peripheral surface of the shaft member to cooperate with the shaft member to form a shaft member unit and having a second inner raceway in the outer peripheral surface thereof, and a plurality of second balls provided between the second inner raceway and the second outer raceway, c. the roller clutch adapted to be locked in one of the rotation directions and unlocked in the other of the rotation directions, and comprising an outer diameter section provided in the inner peripheral portion of the pulley member, an inner diameter section provided in the outer peripheral portion of the shaft member and having a cam portion on the outer peripheral surface thereof, a plurality of rollers provided between the outer peripheral surface of the inner diameter section and the inner peripheral surface of the outer diameter section, a retainer provided between the outer diameter section and the inner diameter section and having pockets to hold the rollers on the inside thereof, respectively, and a plurality of springs engaged with the retainer to press the rollers, respectively, d. the inner diameter section of the roller clutch having a second fitting portion to be engaged with a first fitting portion provided in the retainer of the roller clutch, e. the retainer of the roller clutch having a falling-prevention means for the rollers in addition to the first fitting portion, f. the shaft member unit having a plurality of stepped sections two of which are used to form a means to regulate displacement in the axial direction of the retainer of the roller clutch, g. with the rollers being held in the pockets in the retainer of the roller clutch and pressed by the springs engaged with the retainer, respectively, installing the retainer on the radially inner side of the outer diameter section of the roller clutch to form an assembly, h. providing the cam portion of the inner diameter section of the roller clutch in alignment in phase with the rollers of the assembly, to insert the inner diameter section of the roller clutch below the rollers, i. then, fixing either one of the retainer of the roller clutch and the inner diameter section of the roller clutch of the assembly with a jig, with the other being rotated, and as well compressing the springs simultaneously, j. then relatively displacing the retainer of the roller clutch and the inner diameter section of the roller clutch in the axial direction with respect to each other for engagement between the first fitting portion and second fitting portion, and k. then installing the second ball bearing between the inner peripheral surface of the pulley member and the outer peripheral surface of the shaft member.

2. A method of assembling a pulley apparatus with built-in roller clutch for use in belt transmission of an auxiliary machinery of an engine, the pulley apparatus comprising a pulley member, a shaft member provided on the radially inner side of the pulley member, a first ball bearing provided between the pulley member and the shaft member on one side in the axial direction thereof, a second ball bearing provided between the pulley member and the shaft member on the other side in the axial direction thereof, and a roller clutch provided between the pulley member and the shaft member, a. the first ball bearing comprising an outer diameter section provided in the inner peripheral portion of the pulley member and having a first outer raceway in the inner peripheral surface thereof, an inner diameter section provided in the outer peripheral portion of the shaft member and having a first inner raceway in the outer peripheral surface thereof, and a plurality of first balls provided between the first inner raceway and the first outer raceway, b. the second ball bearing comprising an outer race provided separate from the pulley member, fitted into the inner peripheral surface of the pulley member and having a second outer raceway in the inner peripheral surface thereof, an inner race fitted onto the outer peripheral surface of the shaft member to cooperate with the shaft member to form a shaft member unit and having a second inner raceway in the outer peripheral surface thereof, and a plurality of second balls provided between the second inner raceway and the second outer raceway, c. the roller clutch adapted to be locked in one of the rotation directions and unlocked in the other of the rotation directions, and comprising an outer diameter section provided in the inner peripheral portion of the pulley member, an inner diameter section provided in the outer peripheral portion of the shaft member and having a cam portion on the outer peripheral surface thereof, a plurality of rollers provided between the outer peripheral surface of the inner diameter section and the inner peripheral surface of the outer diameter section, a retainer provided between the outer diameter section and the inner diameter section and having pockets to hold the rollers on the inside thereof, respectively, and a plurality of springs engaged with the retainer to press the rollers, respectively, d. the inner diameter section of the roller clutch having a second fitting portion to be engaged with a first fitting portion provided in the retainer of the roller clutch, e. the retainer of the roller clutch having a falling-prevention means for the rollers in addition to the first fitting portion, f. the shaft member unit having a plurality of stepped sections two of which are used to form a means to regulate displacement in the axial direction of the retainer of the roller clutch, g. at least one of the first fitting portion and second fitting portion having a beveled section to simultaneously compress the springs by way of rotating the retainer of the roller clutch relative to the inner diameter section of the roller clutch corresponding to the engagement between the both fitting portions, h. with the rollers being held in the pockets in the retainer of the roller clutch and pressed by the springs engaged with the retainer, respectively, and with the rollers being pressed with the springs engaged with the retaner, respectively, installing the retainer on the radially inner side of the outer diameter section of the roller clutch to form the assembly, i. with the concave portion of the cam portion on the outer peripheral surface of the inner diameter section of the roller clutch provided in alignment in phase in the circumferential direction with the rollers of the assembly, inserting the inner diameter section of the roller clutch below the rollers of the assembly, and then, utilizing the beveled section for engagement between the first fitting portion and second fitting portion to simultaneously compress the springs to provide the inner diameter section of the roller clutch on the radially inner side of the assembly, and j. then installing the second ball bearing between the inner peripheral surface of the pulley member and the outer peripheral surface of the shaft member.
